Europäisches Patentamt

European Patent Office

Office européen des brevets

(11) Veröffentlichungsnummer: **0 052 253 B1**

(12) **EUROPÄISCHE PATENTSCHRIFT**

(45) Veröffentlichungstag der Patentschrift:
16.05.84

(21) Anmeldenummer: 81108670.1

(22) Anmeldetag: 22.10.81

(51) Int. Cl.³: **C 02 F 1/28,** C 22 B 3/00,
C 22 B 11/04, C 22 B 15/12,
C 22 B 43/00

(54) Verfahren zur Abtrennung von Metallen aus wässrigen Lösungen.

(30) Priorität: 13.11.80 DE 3042724

(43) Veröffentlichungstag der Anmeldung:
26.05.82 Patentblatt 82/21

(45) Bekanntmachung des Hinweises auf die Patenterteilung:
16.05.84 Patentblatt 84/20

(84) Benannte Vertragsstaaten:
AT BE CH DE FR GB IT LI LU NL SE

(56) Entgegenhaltungen:
EP-A-0 010 381
DE-A-2 808 961

(73) Patentinhaber: HOECHST AKTIENGESELLSCHAFT,
Postfach 80 03 20, D-6230 Frankfurt am Main 80 (DE)

(72) Erfinder: Lehr, Klaus, Dr., Am grünen Weg 10,
D-5030 Hürth-Knapsack (DE)
Erfinder: Heymer, Gero, Dr., Fasanenaue 12,
D-5042 Erftstadt (DE)
Erfinder: May, Christian, Berliner Strasse 1,
D-5042 Erftstadt (DE)
Erfinder: Klein, Hermann, Dr. Kürten-Strasse 1,
D-5030 Hürth (DE)

Verfahren zur Abtrennung von Metallen aus wäßrigen Lösungen

Die vorliegende Erfindung betrifft ein Verfahren zur Abtrennung von Halbedel- und/oder Edelmetallen aus Verbindungen dieser Metalle gelöst enthaltenden wäßrigen Lösungen durch Umsetzung mit rotem Phosphor.

Die Gewinnung oder Rückgewinnung von Quecksilber, Kupfer, Silber, Gold und den übrigen Edelmetallen aus bei industriellen Prozessen anfallenden wäßrigen Lösungen ist beim Quecksilber aus Umweltschutzgründen erforderlich, während es bei den übrigen genannten Metallen aus wirtschaftlichen Gründen wünschenswert ist.

Zur Abtrennung von Quecksilber aus wäßrigen Lösungen ist schon vorgeschlagen worden, es entweder durch Ausfällung abzuscheiden (DE-C 2 102 900), oder durch Ionenaustauscher zu entfernen (US-A 3 085 859), oder durch Flüssig-Flüssig-Extraktion abzuscheiden (vergl. Quim. Ind. (Madrid) 1978, 24 (2), Seiten 136 sowie 139 bis 142), oder nach Reduktion zum Metall mit Heißluft auszutreiben (US-A 4 160 730).

Weiterhin könnten gelöste Metallverbindungen von Kupfer, Silber, Palladium und Quecksilber aus ihren wäßrigen Lösungen elektrochemisch unter Verwendung von Festbett- und Wirbelbettzellen entfernt werden (vergl. Chem.-Ing.-Techn. 50 (1978) Nr. 5, Seiten 332 bis 337).

Schließlich ist es bekannt, daß bei der Behandlung von wäßrigen Lösungen von Salzen des Quecksilbers, Kupfers, Silbers, Goldes, Palladiums oder Osmiums mit rotem Phosphor entweder die Metalle oder ihre Phosphide abgeschieden werden (vergl. Gmelins Handbuch der Anorganischen Chemie, System-Nr. 16, Teil B (1964) Seiten 322 bis 329).

Nachteilig ist bei den genannten Verfahren, daß sie entweder einen großen apparativen Aufwand erfordern oder eine Vorreinigung des Abwassers zur Eliminierung von Schmutzpartikeln notwendig ist oder der Abscheidungsgrad des Metalles aus dem Abwasser unbefriedigend ist.

Es ist daher Aufgabe der vorliegenden Erfindung, ein Verfahren zur Abtrennung von Metallen wie Quecksilber, Kupfer und Edelmetallen aus wäßrigen Lösungen, welche Verbindungen dieser Metalle gelöst enthalten, anzugeben, das mit geringem apparativen Aufwand und hohen Raum-Zeit-Ausbeuten ein praktisch metallfreies Wasser liefert. Das wird erfindungsgemäß dadurch erreicht, daß die Verbindungen von Halbedel- und/oder Edelmetallen gelöst enthaltenden wäßrigen Lösungen durch eine Zone geführt werden, in welcher sich eine Schüttung von körnigem rotem Phosphor mit einer Korngröße von 0,01 bis 10 mm befindet.

Das Verfahren gemäß der Erfindung kann weiterhin wahlweise auch noch dadurch gekennzeichnet sein, daß

a) der rote Phosphor Korngrößen von 0,25 bis 1 mm aufweist;

b) der rote Phosphor an seiner Oberfläche chemisch aktiviert ist;

c) als Aktivierungsmittel Bleichlauge verwendet ist;

d) der rote Phosphor mit Aktivkohle vermischt eingesetzt wird, wobei der Anteil der Aktivkohle bis zu 98 Gew.-% beträgt,

e) der Anteil der Aktivkohle 15 bis 40 Gew.-% beträgt;

f) die wäßrigen Lösungen anschließend durch eine weitere Zone geführt werden, in welcher sich Aktivkohle befindet;

g) die Aktivkohle Korngrößen von 0,01 bis 10 mm aufweist;

h) die Aktivkohle Korngrößen von 0,25 bis 1 mm aufweist.

Das erfindungsgemäße Verfahren eignet sich für Metalle mit positivem Normalpotential, beispielsweise Kupfer, Silber, Gold, Quecksilber oder Platinmetalle.

Das Verfahren gemäß der Erfindung kann kontinuierlich mit Hilfe einer vertikal angeordneten Säule durchgeführt werden, deren unteres Ende mit einer Stützplatte oder einem Stützgewebe verschlossen ist, auf denen die Schüttung aus rotem Phosphor ruht. Dabei empfiehlt es sich, die Stützfunktion der Platte oder des Gewebes durch vorheriges Aufbringen einer Schicht eines feinteiligen Materials wie Sand oder Aktivkohle zu verbessern.

Beispiel 1 (Vergleichsbeispiel)

In einem Becherglas wurden 2 l Quecksilberchloridlösung mit 50 mg $Hg^{++}$/l mit 250 g rotem Phosphor (Korngröße: 250 bis 500 μm) unter starkem Rühren in Kontakt gebracht. Nach jeweils 10 Minuten Rührzeit wurde von der klaren überstehenden Lösung eine Probe gezogen und ihr Quecksilbergehalt analytisch ermittelt. Die Analysenresultate zeigt die folgende Tabelle.

Tabelle

| Reaktionszeit (min) | Quecksilbergehalt (mg/l) |
|---|---|
| 10 | 4,0 |
| 20 | 3,2 |
| 30 | 2,8 |
| 40 | 1,9 |
| 50 | 1,3 |
| 60 | 1,0 |

Beispiel 2 (Vergleichsbeispiel)

In zwei durch eine Brücke miteinander verbundenen 1 l-Rundkolben wurden je 20 g roter Phosphor (Korngröße: 60% kleiner als 0,075 mm) mit Hilfe eines Rührers kräftig in Wasser aufgewirbelt. Zur Verhinderung des Austrags von rotem Phosphor war dem Kolben ein Filter aus Quarzwolle und Raschigringen nachgeschaltet. Durch die Kolben wurden 2 l/h einer Quecksilberchloridlösung mit 50 mg $Hg^{++}$/l, 5 g NaCl/l und 11 mg $Cl_2$/l unter stetigem Rühren hindurchgeleitet. Die Quecksilbergehalte in der ablaufenden Flüssigkeit betrugen zwischen 0,1 und 0,5 mg/l.

### Beispiel 3 (gemäß der Erfindung)

In einer Säule von 4 cm Durchmesser wurde auf eine Schüttung von 25 g Aktivkohle (Hydraffin 71 der Fa. Lurgi; Korngröße: 250 bis 500 μ) ein Gemisch von 75 g der genannten Aktivkohle und 250 g rotem Phosphor (Korngröße: 250 bis 500 μ) geschichtet. Durch die Säule wurden 2 l/h qecksilberchloridhaltiges Wasser mit 50 mg $Hg^{++}$/l durchgesetzt. Die Säule nahm insgesamt 350 g Quecksilber auf, ohne daß der Quecksilbergehalt des ablaufenden Wassers über 0,01 mg/l anstieg.

### Beispiel 4 (gemäß der Erfindung)

In einer Säule von 4 cm Durchmesser befand sich eine Schüttung von 100 g Aktivkohle (Hydraffin 71 der Fa. Lurgi; Korngröße: 250 bis 500 μ), welche mit 250 g rotem Phosphor (Korngröße: 250 bis 500 μ) überschichtet war. Durch die Säule wurden 2 l/h einer wäßrigen Lösung von Quecksilberchlorid (50 mg $Hg^{++}$/l), Kochsalz (5 g/l) und Chlor (11 mg/l) durchgesetzt. Die Säule nahm insgesamt 608 g Quecksilber auf, ohne daß der Quecksilbergehalt des ablaufenden Wassers über 0,01 mg/l anstieg.

### Beispiel 5 (gemäß der Erfindung)

Durch eine wie in Beispiel 3 präparierte Säule wurden 2 l/h einer wäßrigen Lösung wie in Beispiel 4 durchgesetzt. Die Säule nahm insgesamt 550 g Quecksilber auf, ohne daß der Quecksilbergehalt des ablaufenden Wassers über 0,01 mg/l anstieg.

### Beispiel 6 (gemäß der Erfindung)

Durch eine wie in Beispiel 3 präparierte Säule wurden 2 l/h einer wäßrigen Lösung von Quecksilberchlorid (50 mg $Hg^{++}$/l) und Kochsalz (5 g/l) durchgesetzt. Die Quecksilbergehalte der ablaufenden Flüssigkeit waren kleiner als 0,01 mg/l. Nachdem die Säule 176 g Quecksilber aufgenommen hatte, ohne daß ihr Durchschlagen beobachtet werden konnte, wurde der Versuch abgebrochen.

### Beispiel 7 (gemäß der Erfindung)

In einer Säule von 4 cm Durchmesser befand sich eine Schüttung von 50 g Aktivkohle (Hydraffin 71 der Fa. Lurgi; Korngröße: 250 bis 500 μ), welche mit einem Gemenge von 150 g der genannten Aktivkohle und 500 g rotem Phosphor (Korngröße: 250 bis 500 μ) überschichtet war. Durch die Säule wurden 2 l/h einer wäßrigen Lösung von Quecksilberchlorid (50 mg $Hg^{++}$/l), Kochsalz (250 g/l) und Chlor (11 mg/l) durchgesetzt. Die Säule konnte 232 g Quecksilber aufnehmen, ohne daß der Quecksilbergehalt des ablaufenden Wassers über 0,01 mg/l anstieg.

### Beispiel 8 (gemäß der Erfindung)

Beispiel 7 wurde mit der Abänderung wiederholt, daß sich Säule und Lösung auf einer Temperatur von 45° C befanden und die Quecksilberkonzentration der wäßrigen Lösung 10 mg $Hg^{++}$/l betrug. Dabei konnte die Säule 41 g Quecksilber aufnehmen, ohne daß der Quecksilbergehalt des ablaufenden Wassers 0,01 mg/l überstieg.

### Beispiel 9 (gemäß der Erfindung)

Durch eine Säule wie in Beispiel 4 wurde eine wäßrige Silbernitratlösung (50 mg $Ag^{+}$/l) gedrückt, wobei die Verweilzeit in der Säule 15 Minuten betrug. Die Silberrestgehalte des ablaufenden Wassers lagen unter 0,05 mg/l. Nachdem die Säule 27 g Silber aufgenommen hatte, ohne daß ein Durchschlagen erfolgte, wurde der Versuch abgebrochen.

### Beispiel 10 (gemäß der Erfindung)

Durch eine Säule wie in Beispiel 4 wurde eine wäßrige Silbersulfatlösung (50 mg $Ag^{+}$/l) gedrückt, wobei die Verweilzeit in der Säule 15 Minuten betrug. Die Silberrestgehalte des ablaufenden Wassers lagen unter 0,05 mg/l. Nachdem die Säule 20 g Silber aufgenommen hatte, ohne daß ein Durchschlagen erfolgte, wurde der Versuch abgebrochen.

### Beispiel 11 (gemäß der Erfindung)

Durch eine Säule wie in Beispiel 3 wurde eine wäßrige Kupfersulfatlösung (50 mg $Cu^{++}$/l) gedrückt, wobei die Verweilzeit in der Säule 15 bis 30 Minuten betrug. Der Kupferrestgehalt des ablaufenden Wassers lag bei etwa 0,2 mg/l. Die Säule nahm 129 g Kupfer auf, ohne daß ein Durchschlagen erfolgte.

### Beispiel 12 (gemäß der Erfindung)

In eine Säule von 10 cm Durchmesser wurde auf eine Schüttung von 250 g Aktivkohle (Epibon DG der Fa. Lurgi, Korngröße 3 mm) ein Gemisch von 750 g der genannten A-Kohle und 4000 g rotem Phosphor (Korngröße 3 mm) geschichtet. Durch die Säule wurde 1 l/h quecksilberchloridhaltiges Wasser mit 50 mg $Hg^{2+}$/l durchgesetzt. Die Säule nahm insgesamt 200 g Quecksilber auf, ohne das der Quecksilbergehalt des ablaufenden Wassers über 0,01 mg/l anstieg.

### Beispiel 13 (gemäß der Erfindung)

In eine Säule von 4 cm Durchmesser wurde auf eine Schüttung von 25 g Aktivkohle (Hydraffin 71 der Fa. Lurgi, Korngröße 250—500 μ) ein Gemisch von 75 g der genannten Aktivkohle und 250 g rotem Phosphor (Korngröße 250—500 μ) geschichtet. Durch die Säule wurde 1 l/h palladiumchloridhaltiges Wasser mit 50 mg $Pd^{2+}$/l durchgesetzt. Die Säule nahm insgesamt 144 g Palladium auf, ohne daß der Palladiumgehalt des ablaufenden Wassers über 0,1 mg/l (analytische Nachweisgrenze) anstieg.

Aus einem Vergleich der Beispiele 1 und 2 mit den erfindungsgemäßen Beispielen 3 bis 8 und 12 geht hervor, daß die Quecksilberrestgehalte im ablaufenden Wasser bei den erfindungsgemäßen Beispielen überraschenderweise sehr niedrig liegen; und zwar um mehr als zwei Zehnerpotenzen unter den Gehalten beim diskontinuierlichen Verfahren (Beispiel 1) und mehr als eine Zehnerpotenz beim kontinuierlichen Verfahren mit einer Aufschlämmung von rotem Phosphor (Beispiel 2). Darüber hinaus zeigen die Beispiele 4, 5, 7 und 8, daß das Verfahren gemäß der Erfindung auch bei Anwesenheit von Oxidationsmitteln die nahezu quantitative Abscheidung des Quecksilbers erlaubt.

## Patentansprüche

1. Verfahren zur Abtrennung von Halbedel- und/oder Edelmetallen aus Verbindungen dieser Metalle gelöst enthaltenden wäßrigen Lösungen durch Umsetzung mit rotem Phosphor, dadurch gekennzeichnet, daß die wäßrigen Lösungen durch eine Zone geführt werden, in welcher sich eine Schüttung von körnigem rotem Phosphor mit einer Korngröße von 0,01 bis 10 mm befindet.

2. Verfahren nach Anspruch 1, dadurch gekennzeichnet, daß der rote Phosphor Korngrößen von 0,25 bis 1 mm aufweist.

3. Verfahren nach Anspruch 1 oder 2, dadurch gekennzeichnet, daß der rote Phosphor an seiner Oberfläche chemisch aktiviert ist.

4. Verfahren nach Anspruch 3, dadurch gekennzeichnet, daß als Aktivierungsmittel Bleichlauge verwendet ist.

5. Verfahren nach einem der Ansprüche 1 bis 4, dadurch gekennzeichnet, daß der rote Phosphor mit Aktivkohle vermischt eingesetzt wird, wobei der Anteil der Aktivkohle bis zu 98 Gew.-% beträgt.

6. Verfahren nach Anspruch 5, dadurch gekennzeichnet, daß der Anteil der Aktivkohle 15 bis 40 Gew.-% beträgt.

7. Verfahren nach einem der Ansprüche 1 bis 6, dadurch gekennzeichnet, daß die wäßrigen Lösungen anschließend durch eine weitere Zone geführt werden, in welcher sich Aktivkohle befindet.

8. Verfahren nach einem der Ansprüche 5 bis 7, dadurch gekennzeichnet, daß die Aktivkohle Korngrößen von 0,01 bis 10 mm aufweist.

9. Verfahren nach Anspruch 8, dadurch gekennzeichnet, daß die Aktivkohle Korngrößen von 0,25 bis 1 mm aufweist.

## Claims

1. Process for separating seminoble and/or noble metals from aqueous solutions having compounds of these metals dissolved therein by subjecting the solutions to reaction with red phosphorus, which comprises: passing the aqueous solutions through a zone containing a layer of granular red phosphorus particles with a size of 0,01 to 10 mm.

2. Process as claimed in claim 1, wherein the red phosphorus particles have a size of 0,25 to 1 mm.

3. Process as claimed in claim 1 or 2, wherein the red phosphorus particles have a chemically activated surface area.

4. Process as claimed in claim 3, wherein the activating agent is bleaching liquor.

5. Process as claimed in any of claims 1 to 4, wherein the red phosphorus is used in admixture with active carbon, the latter being employed in a proportion of up to 98 weight %.

6. Process as claimed in claim 5, wherein the active carbon is used in a proportion of 15 to 40 weight %.

7. Process as claimed in any of claims 1 to 6, wherein the aqueous solutions are subsequently passed through a second zone containing active carbon.

8. Process as claimed in any of claims 5 to 7, wherein the active carbon particles have a size of 0,01 to 10 mm.

9. Process as claimed in claim 8, wherein the active carbon particles have a size of 0,25 to 1 mm.

## Revendications

1. Procédé de séparation de métaux nobles et/ou seminobles de solutions aqueuses contenant des composés de ces métaux à l'état dissous, par réaction avec du phosphore rouge, caractérisé en ce que l'on fait passer les solutions aqueuses à travers une zone contenant une couche de phosphore rouge en grains d'une granulométrie de 0,01 à 10 mm.

2. Procédé selon la revendication 1, caractérisé en ce que le phosphore rouge présente une granulométrie de 0,25 à 1 mm.

3. Procédé selon la revendication 1 ou 2, caractérisé en ce que le phosphore rouge est chimiquement acivé à sa surface.

4. Procédé selon la revendication 3, caractérisé en ce que l'on utilise comme agent d'activation une lessive décolorante.

5. Procédé selon l'une des revendications 1 à 4, caractérisé en ce que l'on utilise le phosphore rouge en mélange avec du charbon actif, ce dernier étant utilisé jusqu'à une proportion de 98% en poids.

6. Procédé selon la revendication 5, caractérisé en ce que l'on utilise le charbon actif en proportion de 15 à 40% en poids.

7. Procédé selon l'une des revendications 1 à 6, caractérisé en ce que l'on fait ensuite passer les solutions aqueuses à travers une seconde zone contenant du charbon actif.

8. Procédé selon l'une des revendications 5 à 7, caractérisé en ce que le charbon actif présente une granulométrie de 0,01 10 mm.

9. Procédé selon la revendication 8, caractérisé en ce que le charbon actif présente une granulométrie de 0,25 à 1 mm.